(19) Europäisches Patentamt
European Patent Office
Office européen des brevets

(11) **EP 4 257 633 B1**

(12) **EUROPEAN PATENT SPECIFICATION**

(45) Date of publication and mention
of the grant of the patent:
**23.07.2025 Bulletin 2025/30**

(51) International Patent Classification (IPC):
*C08J 3/24* (2006.01)    *C08J 3/12* (2006.01)
*C08K 5/053* (2006.01)   *C08K 5/109* (2006.01)
*C08K 5/1515* (2006.01)  *C08J 3/075* (2006.01)

(21) Application number: **22904707.1**

(52) Cooperative Patent Classification (CPC):
**C08J 3/243; C08J 3/075; C08J 3/247;**
C08J 2333/08

(22) Date of filing: **09.12.2022**

(86) International application number:
**PCT/KR2022/020008**

(87) International publication number:
**WO 2023/106878 (15.06.2023 Gazette 2023/24)**

(54) **PREPARATION METHOD FOR SUPER ABSORBENT POLYMER**

VERFAHREN ZUR HERSTELLUNG EINES SUPERABSORBIERENDEN POLYMERS

PROCÉDÉ DE PRÉPARATION D'UN POLYMÈRE SUPERABSORBANT

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **10.12.2021 KR 20210177007
08.12.2022 KR 20220170466**

(43) Date of publication of application:
**11.10.2023 Bulletin 2023/41**

(73) Proprietor: **LG Chem, Ltd.
Seoul 07336 (KR)**

(72) Inventors:
• **LEE, Jin Woo
Daejeon 34122 (KR)**
• **KIM, Jun Kyu
Daejeon 34122 (KR)**
• **KIM, Changhun
Daejeon 34122 (KR)**

(74) Representative: **Plasseraud IP
104 Rue de Richelieu
CS92104
75080 Paris Cedex 02 (FR)**

(56) References cited:
**EP-A1- 3 318 596      EP-A1- 3 424 988
EP-A1- 3 540 001      CN-A- 105 131 314
CN-A- 106 750 475     KR-A- 20050 016 324
KR-A- 20200 075 195   KR-B1- 102 087 339**

**Description**

[Technical Field]

Cross-reference to Related Application

The present application is based on, and claims priority from, Korean Patent Application Nos. 10-2021-0177007 and 10-2022-0170466, filed on December 10, 2021 and December 8, 2022, respectively.
The present invention relates to a method of preparing a superabsorbent polymer. More particularly, the present invention relates to a method of preparing a superabsorbent polymer, in which variations in centrifugal retention capacity of superabsorbent polymer particles to be prepared are reduced by controlling heat treatment temperature conditions in a surface crosslinking step, thereby improving absorption properties of the superabsorbent polymer finally prepared.

[Background Art]

A superabsorbent polymer (SAP) is a synthetic polymeric material capable of absorbing moisture from 500 to 1000 times its own weight. Various manufacturers have denominated it as different names, such as SAM (Super Absorbency Material), AGM (Absorbent Gel Material), etc. Since such superabsorbent polymers started to be practically applied in sanitary products, now they have been widely used for water retaining soil products for gardening, water stop materials for the civil engineering and construction, sheets for raising seedling, fresh-keeping agents for food distribution fields, materials for poultice, etc.
In most cases, these superabsorbent polymers have been widely used in the field of sanitary materials such as diapers or sanitary napkins. Inside the sanitary materials, the superabsorbent polymer is generally distributed throughout pulp. However, recent efforts have been continuously made to provide sanitary materials such as diapers having a thinner thickness, etc., and as part of that, diapers having a reduced content of pulp, and furthermore, diapers having no pulp, so-called pulpless diapers are actively under development.
As described above, such a sanitary material having a reduced content of pulp or having no pulp includes the superabsorbent polymer at a relatively high ratio, and the superabsorbent polymer particles are inevitably included as multiple layers in the sanitary materials. In order to allow the whole superabsorbent polymer particles included as multiple layers to more efficiently absorb a large amount of liquid such as urine, etc., it is necessary that the superabsorbent polymer basically exhibits high absorption performance and high absorption rate.
Meanwhile, to obtain superabsorbent polymers having excellent physical properties, the polymer powder obtained in polymerization, pulverization, drying, and final pulverization processes is subjected to surface treatment, or various process modifications are being attempted to increase efficiency of the polymerization, pulverization, and drying steps.
In such a surface crosslinking process, physical properties of the prepared absorbent polymer particles vary depending on operating conditions in a device, and when variations in the absorption properties increase, there has been a problem in that it is difficult to obtain a superabsorbent polymer with a desired quality. Therefore, research is needed to optimize the operating conditions for the surface crosslinking process.
Patent documents EP 3 424 988 A1, EP 3 318 596 A1 and EP 3 540 001 A1 describe methods of preparing superabsorbent polymers, wherein a surface-crosslinked layer is formed by performing heat treatment of the base polymer powder in the presence of a surface crosslinking agent.

[Disclosure]

[Technical Problem]

Accordingly, there is provided a method of preparing a superabsorbent polymer, in which variations in centrifugal retention capacity of superabsorbent polymer particles to be prepared are reduced by controlling heat treatment temperature conditions in a surface crosslinking step, thereby improving absorption properties of the superabsorbent polymer finally prepared.

[Technical Solution]

To achieve the above object, there is provided a method of preparing a superabsorbent polymer, the method including the steps of:

forming a water-containing gel polymer by crosslinking-polymerizing an acrylic acid-based monomer having acidic groups, of which at least part is neutralized, in the presence of an internal crosslinking agent (step 1); obtaining a base polymer powder by drying, pulverizing, and classifying the water-containing gel polymer (step 2); and preparing superabsorbent polymer particles, on which a surface-crosslinked layer is formed, by performing heat treatment of the base polymer powder in the presence of a surface crosslinking agent (step 3); wherein the surface crosslinking of the step 3 is performed by heating to a target temperature (T), and a difference ($T_2 - T_1$) between the temperature ($T_2$) and the temperature ($T_1$) is 10°C to 20°C, the temperature ($T_1$) is a temperature at the time point when 25% to 40% of the total time of the surface crosslinking of the step 3 passes, and the temperature ($T_2$) is a temperature at the time point when 70% to 100% thereof passes.

[Effect of the Invention]

According to a method of preparing a superabsorbent polymer of the present invention, variations in centrifugal retention capacity of superabsorbent polymer particles to be prepared are reduced by controlling heat treatment temperature conditions in a surface crosslinking step, thereby preparing a superabsorbent polymer having improved absorption properties of the superabsorbent polymer finally prepared.

[Brief Description of Drawings]

FIG. 1 shows a graph showing measured values of CRC according to the surface crosslinking reaction time in Examples and Comparative Examples of the present invention; and
FIG. 2 shows a graph showing values of AUP vs CRC according to the surface crosslinking reaction time in Examples and Comparative Examples of the present invention.

[Best Mode for Carrying Out the Invention]

The terms used in this description are just for explaining exemplary embodiments and it is not intended to restrict the present invention.

The singular expression may include the plural expression unless it is differently expressed contextually. It must be understood that the term "include", "equip", or "have" in the present description is only used for designating the existence of characteristics taken effect, steps, components, or combinations thereof, and do not exclude the existence or the possibility of addition of one or more different characteristics, steps, components, or combinations thereof beforehand.

The terms "first, second, third", and the like are used to describe a variety of components, and these terms are merely employed to differentiate a certain component from other components.

As used herein, the term "polymer" refers to those in a polymerized state of an acrylic acid-based monomer, and may include all water content ranges or particle size ranges. Among the above polymers, a polymer having a water content (moisture content) of about 40% by weight or more in a state after polymerizing before drying may be referred to as a water-containing gel polymer, and particles obtained by pulverizing and drying such a water-containing gel polymer may be referred to as a crosslinked polymer.

Further, the term "superabsorbent polymer powder" refers to a material in the form of particles, the material including a crosslinked polymer which is obtained by polymerizing an acrylic acid-based monomer including acidic groups of which at least part is neutralized, and then crosslinking by an internal crosslinking agent.

Further, the term "superabsorbent polymer" refers to, depending on the context, a crosslinked polymer obtained by polymerizing an acrylic acid-based monomer including acidic groups of which at least part is neutralized, or a base polymer in the form of powder consisting of superabsorbent polymer particles obtained by pulverizing the crosslinked polymer, or is used to encompass those made suitable for commercialization by performing an additional process on the crosslinked polymer or the base polymer, for example, surface crosslinking, re-assembling of fine particles, drying, pulverizing, classifying, etc.

Further, as used herein, the term "crosslinked polymer" refers to those obtained by performing crosslinking polymerization of the acrylic acid-based monomer in the presence of an internal crosslinking agent, and the "base polymer particles" refers to a particle-type (powder-type) material including such a crosslinked polymer.

A method of preparing a superabsorbent polymer according to one embodiment of the present invention may include the steps of forming a water-containing gel polymer by performing a crosslinking polymerization of an acrylic acid-based monomer having acidic groups, of which at least part is neutralized, in the presence of an internal crosslinking agent (step 1); obtaining a base polymer powder by drying, pulverizing, and classifying the water-containing gel polymer (step 2); and preparing superabsorbent polymer particles, on which a surface-crosslinked layer is formed, by performing heat treatment of the base polymer powder in the presence of a surface crosslinking agent (step 3); wherein the surface crosslinking of the step 3 is performed by heating to a target temperature (T), and a difference ($T_2 - T_1$) between the temperature ($T_2$) and the temperature ($T_1$) is 10°C to 20°C, in which the temperature ($T_1$) is a temperature at the time point when 25% to 40% of the total time of the surface crosslinking of the step 3 passes, and the temperature ($T_2$) is a temperature at the time point when 70% to 100% thereof passes.

Traditionally, to improve absorption properties of superabsorbent polymers, a heat treatment process has been performed in the presence of a surface crosslinking agent, and studies has been conducted to improve absorption properties by controlling components of the surface crosslinking agent or other additives to be used.

However, in the surface crosslinking process, physical properties of the prepared absorbent polymer particles vary depending on operating conditions in a device, together with the surface crosslinking component, and therefore, there has been a problem in that it is difficult to uniformly obtain a superabsorbent polymer with a desired quality.

Accordingly, the present inventors have optimized the operating conditions for the surface crosslinking process, and specifically, they have analyzed the influence according to the residence time of the base polymer powder at each temperature in a device, where the surface crosslinking reaction is performed, in the surface crosslinking step which is performed by heating, and they found that when variations of the temperature range at a specific time point are controlled, variations of centrifugal retention capacity of the superabsorbent polymer particles to be prepared may be effectively reduced, thereby completing the present invention.

The superabsorbent polymer prepared according to the present invention may achieve excellent absorption properties, particularly, may have excellent effective capacity.

Hereinafter, each step of the method of preparing a superabsorbent polymer according to one embodiment of the present invention will be described in detail.

**(Step 1: Polymerizing step)**

The method of preparing the superabsorbent polymer according to one exemplary embodiment of the present invention includes the step of forming a water-containing gel polymer by crosslinking-polymerizing an acrylic acid-based monomer having acidic groups of which at least part is neutralized, in the presence of an internal crosslinking agent.

The polymerizing step is a step of forming a water-containing gel polymer by performing photopolymerization and/or thermal polymerization of a monomer composition including an acrylic acid-based monomer having acidic groups, of which at least part is neutralized, in the presence of an internal crosslinking agent.

First, in the presence of the internal crosslinking agent, a monomer mixture including an acrylic acid-based monomer having acidic groups of which at least part is neutralized is prepared. The monomer mixture may further include a polymerization initiator for polymerizing.

The acrylic acid-based monomer may be any monomer commonly used in the preparation of superabsorbent polymers. For non-limiting example, the acrylic acid-based monomer may be a compound represented by the following Chemical Formula 1:

[Chemical Formula 1]     $R_1\text{-COOM}^1$

in Chemical Formula 1,

$R_1$ is a C2-C5 alkyl group containing an unsaturated bond, and
$M^1$ is a hydrogen atom, a monovalent or divalent metal, an ammonium group, or an organic amine salt.

Preferably, the acrylic acid-based monomer may be one or more selected from the group consisting of acrylic acid, methacrylic acid, and a monovalent metal salt thereof, a divalent metal salt thereof, an ammonium salt thereof, and an organic amine salt thereof. When such an acrylic acid-based monomer is used, it is advantageous in that a superabsorbent polymer having improved absorbency may be obtained. In addition, as the monomer, one or more selected from the group consisting of an anionic monomer such as maleic anhydride, fumaric acid, crotonic acid, itaconic acid, 2-acryloyl ethane sulfonic acid, 2-methacryloyl ethane sulfonic acid, 2-(meth)acryloyl propane sulfonic acid, or 2-(meth)acrylamide-2-methylpropane sulfonic acid, and a salt thereof; a nonionic hydrophilic monomer such as (meth)acrylamide, N-substituted (meth)acrylate, 2-hydroxyethyl(meth)acrylate, 2-hydroxypropyl(meth)acrylate, methoxypolyethyleneglycol(meth)acrylate, or polyethyleneglycol(meth)acrylate; and an amino group-containing unsaturated monomer such as (N,N)-dimethylaminoethyl(meth)acrylate or (N,N)-dimethylaminopropyl(meth)acrylamide, and a quaternary compound thereof.

Here, the acrylic acid-based monomer has acidic groups, of which at least part may be partially neutralized with a neutralizing solution. In this regard, as a neutralizing agent included in the neutralizing solution, an alkaline substance capable of neutralizing acidic groups, such as sodium hydroxide, potassium hydroxide, ammonium hydroxide, etc., may be used.

In this regard, the degree of neutralization of the monomer may be 40 mol% to 95 mol%, or 40 mol% to 80 mol%, or 45 mol% to 75 mol%. The range of the degree of neutralization may vary depending on the final physical properties. However, when the degree of neutralization is excessively high, the neutralized monomers are precipitated, and thus polymerization may not readily occur. On the contrary, when the degree of neutralization is excessively low, absorbency of the polymer greatly decreases, and furthermore, the polymer may exhibit hard-to-handle properties, like elastic rubber.

As used herein, the term "internal crosslinking agent" is used to distinguish it from a "surface crosslinking agent" for crosslinking the surface of the base polymer, and the internal crosslinking agent functions to polymerize the acrylic acid-based monomers by crosslinking the unsaturated bonds thereof. The crosslinking in the above step occurs regardless of the surface or inside of the polymer. However, through the surface crosslinking process of the base polymer described below, the particle surface of the superabsorbent polymer finally prepared has a structure crosslinked by the surface crosslinking agent, and the inside thereof has a structure crosslinked by the internal crosslinking agent.

As the internal crosslinking agent, multifunctional components may be used, and for example, one or more selected from the group consisting of N,N'-methylenebisacrylamide, trimethylolpropane tri(meth)acrylate, ethylene glycol di(meth)acrylate, polyethylene glycol (meth)acrylate, propylene glycol di(meth)acrylate, polypropylene glycol (meth)acrylate, butanediol di(meth)acrylate, butylene glycol di(meth)acrylate, diethylene glycol di(meth)acrylate, hexanediol di(meth)acrylate, triethylene glycol di(meth)acrylate, tripropylene glycol di(meth)acrylate, tetraethylene glycol di(meth)acrylate, dipentaerythritol pentaacrylate, glycerin tri(meth)acrylate, pentaerythritol tetraacrylate, triarylamine, ethylene glycol diglycidyl ether, propylene glycol, glycerin, and ethylene carbonate may be used. Preferably, polyethylene glycol di(meth)acrylate, propylene glycol di(meth)acrylate may be used.

The internal crosslinking agent may be used in an amount of 100 ppmw to 10,000 ppmw with respect to the weight of the acrylic acid-based monomer. When the internal crosslinking agent is included in the above content range, strength beyond the appropriate level may be realized by sufficient crosslinking, and sufficient water retention capacity may be realized by introduction of the appropriate crosslinked structure. Preferably, the internal crosslinking agent may be included in an amount of 100 ppmw or more, 200 ppmw or more, 300 ppmw or more, or 600 ppmw or more, and 10,000 ppmw or less, 9,000 ppmw or less, 7,000 ppmw or 5,000 ppmw or less, and 200 ppmw to 9,000 ppmw, 300 ppmw to 7,000 ppmw or 600 ppmw to 5,000 ppmw. When the content of the internal crosslinking agent is too low, sufficient crosslinking does not occur, and thus it may be difficult to achieve a strength beyond the appropriate level, and when the content of the internal crosslinking agent is too high, the internal crosslinking density increases, and thus it may be difficult to achieve a desired water retention capacity.

As the polymerization initiator, a thermal polymerization initiator or a photopolymerization initiator may be used depending on a polymerization method. However, even though the photopolymerization is performed, a certain amount of heat may be generated by UV irradiation or the like, and also generated with the polymerization reaction which is an exothermic reaction. Therefore, the thermal polymerization initiator may be further included.

Here, as the photopolymerization initiator, for example, one or more compounds selected from the group consisting of benzoin ether, dialkyl acetophenone, hydroxyl alkylketone, phenyl glyoxylate, benzyl dimethyl ketal, acyl phosphine, and $\alpha$-aminoketone may be used. Among them, specific examples of acyl phosphine may include commercially available lucirin TPO, i.e., 2,4,6-trimethyl-benzoyl-trimethyl phosphine oxide, or diphenyl(2,4,6-trimethylbenzoyl) phosphine oxide. More various photopolymerization initiators are well disclosed in "UV Coatings: Basics, Recent Developments and New Application (Elsevier 2007)" written by Reinhold Schwalm, p115, which may be served as a reference.

Further, as the thermal polymerization initiator, one or more compounds selected from the group consisting of persulfate-based initiators, azo-based initiators, hydrogen peroxide, and ascorbic acid may be used. Specifically, the persulfate-based initiators may be exemplified by sodium persulfate ($Na_2S_2O_8$), potassium persulfate ($K_2S_2O_8$), ammonium persulfate (($NH_4)_2S_2O_8$) or the like. Further, the azo-based initiators may be exemplified by 2,2-azobis(2-amidinopropane)dihydrochloride, 2,2-azobis-(N,N-dimethylene)isobutyramidine dihydrochloride, 2-(carbamoylazo)isobutyronitrile, 2,2-azobis[2-(2-imidazolin-2-yl)propane] dihydrochloride, 4,4-azobis-(4-cyanovaleric acid) or the like. More various thermal polymerization initiators are well-disclosed in "Principle of Polymerization(Wiley, 1981)" written by Odian, p203, which may be served as a reference.

Such a polymerization initiator may be added in an amount of 10 ppmw to 10,000 ppmw with respect to the weight of the acrylic acid-based monomer. Preferably, the polymerization initiator may be included in an amount of 10 ppmw or more, 30 ppmw or more, 50 ppmw or more, and 10,000 ppmw or less, 5,000 ppmw or less, or 3,000 ppmw or less, and 30 ppmw to 5,000 ppmw, 50 ppmw to 3,000 ppmw or 80 ppmw to 2,500 ppmw. When the concentration of the polymerization initiator is too low, the polymerization rate may become slow, and monomers remaining in the final product may be extracted in a large amount, which is not preferred. On the contrary, when the concentration of the polymerization initiator is too high, polymer chains constituting the network become short, and thus the content of water-soluble components is increased and physical properties of the polymer may deteriorate, such as a reduction in absorbency under pressure, which is not preferred. The content of the polymerization initiator means the content of a mixture of the photopolymerization initiator and the thermal polymerization initiator when they are used together.

In addition, the monomer composition may further include an additive such as a blowing agent, a surfactant, a thickener, a plasticizer, a preservation stabilizer, an antioxidant, etc., as needed.

The blowing agent serves to increase the surface area by forming pores inside the water-containing gel polymer when foaming occurs during polymerization. As the blowing agent, carbonate may be used, and for example, sodium bicarbonate, sodium carbonate, potassium bicarbonate, potassium carbonate, calcium bicarbonate, calcium carbonate, magnesium bicarbonate, or magnesium carbonate may be used.

Further, the blowing agent may be preferably used in an amount of 1500 ppmw or less with respect to the weight of the water-soluble ethylenically unsaturated monomer. When the use of the blowing agent exceeds 1500 ppmw, too many pores are formed to deteriorate gel strength of the superabsorbent polymer and to decrease density, which may cause problems in distribution and storage. Further, the blowing agent may be preferably used in an amount of 500 ppmw or more, or 1000 ppmw or more with respect to the weight of the water-soluble ethylenically unsaturated monomer.

Further, the surfactant induces uniform dispersion of the blowing agent, leading to uniform blowing during blowing, thereby preventing gel strength or density from lowering. As the surfactant, an anionic surfactant is preferably used. Specifically, the surfactant includes an $SO_3^-$ anion, and a compound represented by the following Chemical Formula 2 may be used.

[Chemical Formula 2]     $R\text{-}SO_3Na$

in Chemical Formula 2,
R is a C8 to C16 alkyl.

Further, the surfactant is preferably used in an amount of 300 ppmw or less with respect to the weight of the acrylic acid-based monomer. When the use of the surfactant exceeds 300 ppmw, the content of the surfactant in the superabsorbent polymer increases, which is not preferred. In addition, the surfactant is preferably used in an amount of 100 ppmw or more, or 150 ppmw or more with respect to the weight of the water-soluble ethylenically unsaturated monomer.

Further, such a monomer composition may be prepared in a solution form, in which the raw materials, such as the above-described monomer, internal crosslinking agent, blowing agent, initiator, etc., are dissolved in a solvent.

In this regard, as the applicable solvent, any solvent may be used without limitations in the composition, as long as it is able to dissolve the above-described raw materials. For example, as the solvent, water, ethanol, ethylene glycol, diethylene glycol, triethylene glycol, 1,4-butanediol, propylene glycol, ethylene glycol monobutyl ether, propylene glycol monomethyl ether, propylene glycol monomethyl ether acetate, methyl ethyl ketone, acetone, methyl amyl ketone, cyclohexanone, cyclopentanone, diethylene glycol monomethyl ether, diethylene glycol ethylether, toluene, xylene, butyrolactone, carbitol, methyl cello solve acetate, N,N-dimethylacetamide, or a mixture thereof may be used.

The step of forming the water-containing gel polymer through the polymerization of the monomer composition may be performed by a common polymerization method, and the process is not particularly limited. For non-limiting example, the step may be performed in a reactor equipped with a movable conveyor belt.

Specifically, when the monomer composition is subjected to photopolymerization in the reactor equipped with the movable conveyor belt, the water-containing gel polymer may be obtained in a sheet-type. In this regard, the thickness of the sheet may vary according to the concentration of the monomer composition fed thereto and the feeding speed. The sheet is preferably controlled at a thickness of 0.5 cm to 10 cm in order to assure the production speed while allowing the entire sheet to be uniformly polymerized.

The water-containing gel polymer thus obtained by such a method may exhibit a water content of 40% by weight to 80% by weight. Meanwhile, the "water content", as used throughout the specification, means a weight occupied by water with respect to the total weight of the water-containing gel polymer, which may be a value obtained by subtracting the weight of the dried polymer from the weight of the water-containing gel polymer. Specifically, the water content may be defined as a value calculated by measuring the weight loss due to evaporation of water in the polymer during the process of drying by raising the temperature of the polymer through infrared heating. At this time, the water content is measured under drying conditions: the drying temperature is increased from room temperature to 180°C and then the temperature is maintained at 180°C, and the total drying time is set to 20 minutes, including 5 minutes for the temperature rising step.

**(Step 2: Drying, Pulverizing, and Classifying step)**

Next, the step (step 2) of obtaining a base polymer powder by drying, pulverizing, and classifying the water-containing gel polymer is included.

Specifically, the step of drying the obtained water-containing gel polymer is performed. As needed, the step of coarsely pulverizing the water-containing gel polymer may be further performed, before drying, in order to increase efficiency of the drying process.

In this regard, a pulverizer to be applicable may include, but there is no limitation in the configuration, specifically, any one selected from the group consisting of a vertical pulverizer, a turbo cutter, a turbo grinder, a rotary cutter mill, a cutter mill, a disc mill, a shred crusher, a crusher, a chopper, and a disc cutter, but is not limited to the above-described examples.

In this regard, the step of coarsely pulverizing may be carried out such that the particle size of the water-containing gel polymer becomes about 2 mm to about 10 mm. Pulverizing into a particle size of less than 2 mm is not technically easy due to the high water content of the water-containing gel polymer, and an agglomeration phenomenon between the pulverized particles may occur. Meanwhile, when the polymer is pulverized into a particle size of more than 10 mm, the effect of increasing the efficiency in the subsequent drying step may be poor.

The water-containing gel polymer coarsely pulverized as above or the water-containing gel polymer immediately after polymerization without the step of coarsely pulverizing is subjected to drying. In this regard, a drying temperature of the drying step may be about 150°C to about 250°C. When the drying temperature is lower than 150°C, it is apprehended that the drying time becomes too long and the physical properties of the superabsorbent polymer finally formed may deteriorate. When the drying temperature is higher than 250°C, it is apprehended that only the polymer surface is excessively dried, and thus fine particles may be generated during the subsequent pulverization process, and the physical properties of the superabsorbent polymer finally formed may deteriorate. Therefore, the drying may be preferably performed at a temperature of about 150°C to about 200°C, and more preferably, at a temperature of about 170°C to about 195°C.

Meanwhile, the drying time may be 20 minutes to 90 minutes, in consideration of the process efficiency, but is not limited thereto.

In the step of drying, any drying method may be selected and used without limitation in view of constitution, as long as it is commonly used in the process of drying the water-containing gel polymer. Specifically, the step of drying may be carried out by a method such as hot air supply, infrared irradiation, microwave irradiation or ultraviolet irradiation, etc. When the step of drying as above is finished, the water content of the polymer may be about 0.1% by weight to about 10% by weight.

Next, the step of pulverizing the dried polymer obtained through the step of drying is performed.

The base polymer powder obtained after the step of pulverizing may have a particle size of about 150 μm to about 850 μm. A pulverizer which may be used to achieve the above particle size may specifically include a pin mill, a hammer mill, a screw mill, a roll mill, a disc mill, or a jog mill, etc., but are not limited to the above-described examples.

In order to manage the physical properties of the superabsorbent polymer particles that are finally commercialized after the step of pulverizing, a separate process of classifying the base polymer powder, which is obtained after the pulverization, according to the particle size may be carried out. Preferably, a polymer having a particle size of 150 μm to 850 μm is classified, and only the polymer particles having such a particle size are subjected to a surface crosslinking reaction, followed by commercialization. More specifically, the base polymer powder classified as above may have a particle size of 150 μm to 850 μm, and may include 50% by weight or more of particles having a particle size of 300 μm to 600 μm.

Meanwhile, fines (fine powder) having a particle diameter of less than 150 μm may be generated in the polymerizing, drying, and pulverizing steps, and the fines having a particle size of less than 150 μm, which are classified in the above-mentioned classifying step, are prepared into normal particles of 150 μm or more through a re-assembling process, and then may be recycled as the base polymer powder.

In the process of re-assembling the fines, a method commonly applied in the art may be applied, and for example, a process of agglomerating the fines in a wet state may be performed. Specifically, the classified fines may be agglomerated by mixing with water, and thereafter, normal particles may be prepared by drying water through a re-drying process. In the re-assembling process, additives, such as water-soluble polymers, etc., may be optionally used to improve the cohesive strength of the particles.

**(Step 3: Surface crosslinking step)**

Next, the method of preparing the superabsorbent polymer according to one embodiment of the present invention includes the step (step 3) of preparing superabsorbent polymer particles, on which a surface-crosslinked layer is formed, by performing heat treatment of the base polymer powder in the presence of a surface crosslinking agent.

The step of surface crosslinking is to induce a crosslinking reaction on the surface of the base polymer powder in the presence of the surface crosslinking agent, and unsaturated bonds of the acrylic acid-based monomers, which remain uncrosslinked on the surface, are crosslinked by the surface crosslinking agent, and as a result, the superabsorbent polymer having an increased surface crosslinking density is formed.

Specifically, the surface-crosslinked layer may be formed by a heat treatment process in the presence of the surface crosslinking agent, and the heat treatment process increases the surface crosslinking density, i.e., the external crosslinking density, whereas the internal crosslinking density does not change. The superabsorbent polymer, in which the surface-crosslinked layer is formed, may have a structure in which the external crosslinking density is higher than the internal crosslinking density.

The present inventors have optimized the conditions for the surface crosslinking process, and they have analyzed the influence according to the residence time of the base polymer powder at each temperature in a device, where the surface crosslinking reaction is performed, and they found that when variations of the temperature range at a specific time point are controlled, variations of centrifugal retention capacity of the superabsorbent polymer particles to be prepared may be effectively reduced, thereby completing the present invention.

The surface crosslinking of the step 3 is performed by heating to a target temperature, and when the temperature reduction condition is included in the surface crosslinking step, the surface crosslinking reaction rate is lowered, which may cause a problem that absorbency under pressure (AUP) is lowered. Further, in the present specification, heating to the target temperature may include gradually increasing the temperature and maintaining the temperature at the target temperature.

The target temperature (T) of the surface crosslinking is 170°C to 190°C, and here, the 'target temperature' means the highest reaction temperature of heat treatment. Therefore, the surface crosslinking is performed while heating to the target temperature which is the highest reaction temperature. The target temperature may be preferably 179°C to 195°C, 179°C to 187°C or 182°C to 187°C. By satisfying these surface crosslinking process conditions (particularly, heating conditions and reaction conditions at the highest reaction temperature), a superabsorbent polymer that adequately satisfies physical properties such as better effective capacity, etc. may be prepared.

The surface crosslinking step of the step 3 may be performed by controlling a difference $(T_2 - T_1)$ between the temperature $(T_2)$ and the temperature $(T_1)$ to 10°C to 20°C, the temperature $(T_1)$ which is at the time point when 25% to 40% of the total time of the surface crosslinking passes, and the temperature $(T_2)$ which is at the time point when 70% to 100% thereof passes. By satisfying the above-mentioned temperature variation, it is possible to effectively reduce the variations in the centrifugal retention capacity of the prepared superabsorbent polymer particles.

Preferably, the surface crosslinking step may be performed by controlling a difference $(T_2 - T_1)$ between the temperature $(T_2)$ and the temperature $(T_1)$ to 10°C to 20°C, the temperature $(T_1)$ which is at the time point when 30% to 40% of the total time of the surface crosslinking passes, and the temperature $(T_2)$ which is at the time point when 90% to 100% thereof passes.

When the temperature difference is more than 20°C, variations in the centrifugal retention capacity occur between the prepared superabsorbent polymer particles. On the contrary, when the temperature difference is less than 10°C, surface crosslinking does not occur smoothly, resulting in a very low AUP, or a rapid change occurs in the range of fluctuation in CRC due to the rapid temperature rise, resulting in deterioration of physical properties.

The heat treatment temperature difference $(T_2 - T_1)$ of the surface crosslinking step is preferably 10°C to 17°C or 12°C to 17°C, and within the corresponding range, the above-mentioned problems do not occur, which is preferred.

The total time for which the surface crosslinking is performed is 45 minutes to 75 minutes, which means the total time, taken for the temperature to reach the above-mentioned target temperature by heating, based on the time point when the base polymer powder and the surface crosslinking agent are mixed, for the temperature to maintain the target temperature, and for the product to be discharged into the outside of the surface crosslinking reactor. The total time for which the surface crosslinking is performed is preferably 50 minutes to 60 minutes. On the other hand, in the exemplary embodiments described below, the target temperature was maintained for a long time in the surface crosslinking reactor in order to monitor the change in physical properties of the polymer according to the temperature change of surface crosslinking.

Meanwhile, a heating means for the surface crosslinking reaction is not particularly limited. Heating may be performed by providing a heating medium or by directly providing a heat source. In this regard, the kind of the applicable heating medium may be steam, hot air, a hot fluid such as hot oil or the like, but is not limited thereto. The temperature of the heating medium to be provided may be properly selected in consideration of the means of the heating medium, the heating rate, and the heating target temperature. Meanwhile, as the heat source to be directly provided, an electric heating or gas heating method may be used, but is not limited to the above-described examples.

Further, the reaction device for the surface crosslinking reaction is not particularly limited, as long as it is able to perform the above-mentioned heat treatment process. For example, a paddle dryer may be used.

Meanwhile, as the surface crosslinking agent included in the surface crosslinking agent composition, any surface crosslinking agent component that has been traditionally used in the preparation of superabsorbent polymers may be used without any particular limitation. For example, the surface crosslinking agent may include one or more polyols selected from the group consisting of ethylene glycol, propylene glycol, 1,3-propanediol, 1,4-butanediol, 1,6-hexanediol, 1,2-hexanediol, 1,3-hexanediol, 2-methyl-1,3-propanediol, 2,5-hexanediol, 2-methyl-1,3-pentanediol, 2-methyl-2,4-pentanediol, tripropylene glycol and glycerol; one or more carbonate-based compounds selected from the group consisting of ethylene carbonate and propylene carbonate; an epoxy compound such as ethylene glycol diglycidyl ether, etc.; an oxazoline compound such as oxazolidinone, etc.; a polyamine compound; a mono-, di- or poly-oxazolidinone compound; a cyclic urea compound; and the like. Preferably, one or more selected from the group consisting of 1,3-propanediol, propylene glycol, 1,4-butanediol, ethylene carbonate, propylene carbonate and ethylene glycol diglycidyl ether may be used, and more preferably, a mixture of ethylene carbonate and propylene carbonate at a ratio of 1:1 may be used, or ethylene carbonate may be used alone.

Such a surface crosslinking agent may be used in an amount of 1,000 ppmw to 5,000 ppmw with respect to the base polymer powder, and preferably, used in an amount of 1,000 ppmw to 3,000 ppmw or 1,000 ppmw to 2,000 ppmw. By controlling the content range of the surface crosslinking agent within the above-described range, it is possible to prepare a superabsorbent polymer exhibiting excellent overall physical properties, such as absorption performances, liquid permeability, etc.

Meanwhile, the surface crosslinking agent is added to the base polymer powder in the form of a surface crosslinking agent composition including the same. There is no particular limitation on the method of adding the surface crosslinking agent composition. For example, a method of placing the surface crosslinking agent composition and the base polymer powder in a reactor and mixing them, a method of spraying the surface crosslinking agent composition onto the base polymer powder, a method of continuously supplying the base polymer and the surface crosslinking agent composition to a mixer which is continuously operated, and mixing them, etc. may be used.

Further, the surface crosslinking agent composition may further include water and/or hydrophilic organic solvent as a medium. Therefore, it is advantageous in that the surface crosslinking agent may be evenly dispersed on the base polymer powder. At this time, the content of water and the hydrophilic organic solvent may be applied by controlling the addition ratio with respect to 100 parts by weight of the base polymer powder in order to induce uniform dissolution/dispersion of the surface crosslinking agent, to prevent the aggregation phenomenon of the base polymer powder, and at the same time, to optimize the surface penetration depth of the surface crosslinking agent.

Meanwhile, in the method of preparing the superabsorbent polymer according to one embodiment of the present invention, aluminum salts such as aluminum sulfate salts and other various polyvalent metal salts may be further used during surface crosslinking, in order to further improve liquid permeability, etc. These polyvalent metal salts may be included on the surface crosslinked layer of the superabsorbent polymer finally prepared.

**(Superabsorbent polymer)**

The superabsorbent polymer prepared according to the above-described one embodiment may have a particle size of 150 μm to 850 μm. More specifically, at least 95% by weight or more of the superabsorbent polymer may have a particle size of 150 μm to 850 μm, and the superabsorbent polymer may include 50% by weight or more of particles having a particle size of 300 μm to 600 μm, and less than 3% by weight of fine particles having a particle size of less than 150 μm.

The superabsorbent polymer prepared according to the above-described one embodiment realizes excellent absorption properties, and particularly, exhibits excellent absorption rate and effective capacity.

A centrifugal retention capacity (CRC) of the superabsorbent polymer is 40 g/g or more, preferably, 40 g/g to 43 g/g, or 40 g/g to 42 g/g, as measured in accordance with the EDANA method WSP 241.2. The method of measuring the centrifugal retention capacity (CRC) will be explained in more detail in Experimental Example to be described later.

Absorbency under pressure of 4.8 kPa (= 0.7 psi) (AUP) of the superabsorbent polymer is 18 g/g to 25 g/g, preferably, 19 g/g to 23 g/g, preferably, 19.5 g/g to 23g/g, as measured in accordance with the EDANA method WSP 242.0.R2. The method of measuring the absorbency under pressure (AUP) will be explained in more detail in Experimental Example to be described later.

An effective capacity (EFFC) of the superabsorbent polymer is 31 g/g or more, preferably, 31.2 g/g or more, as calculated by the following Equation 1:

Effective capacity (EFFC) = {Centrifuge Retention Capacity_(CRC) + Absorbency Under Pressure of 4.8 kPa (= 0.7 psi) (AUP)}/2     [Equation 1]

The method of measuring the effective capacity (EFFC) will be explained in more detail in Experimental Example to be described later.

Hereinafter, the actions and effects of the present invention will be described in more detail with reference to specific exemplary embodiments of the present invention. However, these exemplary embodiments are provided only for illustrating the present invention, and the scope of the present invention is not limited thereto.

**[Examples and Comparative Examples]**

**Example 1**

(Step 1 - Polymerizing) In a 3 L glass container equipped with a stirrer and a thermometer, 484 g of acrylic acid, 2,100 ppmw (with respect to the acrylic acid monomer) of polyethylene glycol diacrylate (PEGDA 400, Mw=400) which is an internal crosslinking agent, and 80 ppmw (with respect to the acrylic acid monomer) of diphenyl(2,4,6-trimethylbenzoyl)-phosphine oxide which is a photopolymerization initiator were added, and dissolved, and then 643 g of 31.5 wt% sodium hydroxide solution was added to prepare a water-soluble unsaturated monomer aqueous solution (degree of neutralization: 70 mol%; solid content: 45.8% by weight).

When the temperature of the water-soluble unsaturated monomer aqueous solution increased to 40°C due to the heat of neutralization, the mixture was put in a container containing 2400 ppmw (with respect to the acrylic acid monomer) of sodium persulfate (SPS) which is a thermal polymerization initiator, and UV polymerization was allowed by ultraviolet ray irradiation for 1 minute (UV dose: 10 mV/cm$^2$), and aging was performed by heating in an oven at 80°C for 120 seconds to obtain a water-containing gel polymer sheet.

(Step 2-1 - Drying, Pulverizing) The obtained water-containing gel polymer sheet was passed through a chopper having a hole size of 16 mm to prepare crumbs. Then, the crumbs were dried in an oven capable of shifting airflow up and down. The crumbs were uniformly dried by flowing hot air at 185°C from the bottom to the top for 15 minutes and from the top to the bottom for 15 minutes, such that a water content of the dry product became 2% by weight or less after drying. After the drying process, classifying was performed using an ASTM standard sieve to obtain a base polymer powder having a particle size of 150 μm to 850 μm.

(Step 2-2 - Classifying) Meanwhile, the fine particles having a particle size of less than 150 μm which were generated during the process was subjected to a process of re-assembling fine particles to prepare a fine particle reassembly (B) having a particle size of 150 μm or more. 70 wt% of the dry polymer (A) and 30 wt% of the fine particle reassembly (B) thus obtained were pulverized using a pulverizer, and classified using an ASTM standard sieve to obtain a base polymer powder having a particle size distribution of #20~#30/#30~#50/#50~#100/#100 or less = 22/64/13/1 (wt%).

(Step 3 - Surface crosslinking) Next, 100 parts by weight of the base polymer powder was put in a paddle dryer, and then a surface crosslinking solution containing 4.7 parts by weight of water, 0.2 parts by weight of ethylene carbonate as a surface crosslinking agent, 0.05 parts by weight of a PCE aqueous solution (45 wt% to 55 wt% of polycarboxylic acid salt type surfactant (Cas no. 381686-36-8) + 45 wt% to 55 wt% of water), and an ALS aqueous solution (23 wt% of aluminum sulfate + 73 wt% of water) was injected.

The time of injection of the surface crosslinking solution was regarded as the starting point of surface crosslinking, and surface crosslinking was performed for a total of 55 minutes while increasing the temperature from the initial temperature ($T_0$) of 115°C at the time of injection to the target temperature (T) of 182°C. In this regard, when 20 minutes had elapsed after the injection of the surface crosslinking solution, the temperature was raised to 169°C ($T_1$), and then when 30 minutes had elapsed, the temperature was raised for 10 minutes to 182°C to perform the surface crosslinking reaction. Finally, after maintaining at 182°C ($T_2$) for 20 minutes (= 50 minutes elapsed), the surface-treated powder was discharged when the total residence time in the paddle dryer reached 55 minutes.

Thereafter, the surface-treated powder was classified using an ASTM standard sieve to obtain a superabsorbent polymer powder having a particle size of 150 μm to 850 μm.

## Example 2

A superabsorbent polymer was prepared in the same manner as in Example 1, except that a base polymer powder was used, of which a particle size distribution was controlled to #20~#30/#30~#50/#50~#100/#100 or less = 30/55/13/2 (wt%) by controlling the device in the classifying step of the step 2-2 in Example 1.

## Example 3

A superabsorbent polymer was prepared in the same manner as in Example 1, except that the heating conditions in the surface crosslinking step of the step 3 in Example 1 were controlled. In detail, the surface crosslinking was performed for 55 minutes while heating to the target temperature (T) of 179°C. In this regard, when 20 minutes had elapsed after the injection of the surface crosslinking solution, the temperature was raised to 169°C ($T_1$), and then, when 30 minutes had elapsed, the temperature was raised to 179°C to perform the surface crosslinking reaction. Finally, after maintaining at 179°C ($T_2$) for 20 minutes, the surface-treated powder was discharged when the total residence time in the paddle dryer reached 55 minutes.

## Example 4

A superabsorbent polymer was prepared in the same manner as in Example 1, except that the heating conditions in the surface crosslinking step of the step 3 in Example 1 were controlled. In detail, the surface crosslinking was performed for 55 minutes while heating to the target temperature (T) of 184°C. In this regard, when 20 minutes had elapsed after the injection of the surface crosslinking solution, the temperature was raised to 169°C ($T_1$), and then, when 30 minutes had elapsed, the temperature was raised to 184°C to perform the surface crosslinking reaction. Finally, after maintaining at 184°C ($T_2$) for 20 minutes, the surface-treated powder was discharged when the total residence time in the paddle dryer reached 55 minutes.

### Example 5

A superabsorbent polymer was prepared in the same manner as in Example 1, except that the heating conditions in the surface crosslinking step of the step 3 in Example 1 were controlled. In detail, the surface crosslinking was performed for 55 minutes while heating to the target temperature (T) of 186°C. In this regard, when 20 minutes had elapsed after the injection of the surface crosslinking solution, the temperature was raised to 169°C ($T_1$), and then, when 30 minutes had elapsed, the temperature was raised to 186°C to perform the surface crosslinking reaction. Finally, after maintaining at 186°C ($T_2$) for 20 minutes, the surface-treated powder was discharged when the total residence time in the paddle dryer reached 55 minutes.

### Example 6

A superabsorbent polymer was prepared in the same manner as in Example 1, except that a surface crosslinking solution containing 4.7 parts by weight of water, 0.115 parts by weight of ethylene carbonate and 0.115 parts by weight of propylene carbonate as a surface crosslinking agent, 0.05 parts by weight of a PCE aqueous solution, and 0.3 parts by weight of an AIS aqueous solution with respect to 100 parts by weight of the mixture of the base polymer powder and the fine particle reassembly was injected in the surface crosslinking step of the step 3 of Example 1.

### Example 7

A superabsorbent polymer was prepared in the same manner as in Example 1, except that the heating conditions in the surface crosslinking step of the step 3 in Example 1 were controlled. In detail, the surface crosslinking was performed for 55 minutes while heating to the target temperature (T) of 180°C. In this regard, when 20 minutes had elapsed after the injection of the surface crosslinking solution, the temperature was raised to 160°C ($T_1$), and then, when 30 minutes had elapsed, the temperature was raised to 180°C to perform the surface crosslinking reaction. Finally, after maintaining at 180°C ($T_2$) for 20 minutes, the surface-treated powder was discharged when the total residence time in the paddle dryer reached 55 minutes.

### Comparative Example 1

A superabsorbent polymer was prepared in the same manner as in Example 1, except that the surface crosslinking heating conditions in the surface crosslinking step of the step 3 in Example 1 were changed.

The time of injection of the surface crosslinking solution was regarded as the starting point of surface crosslinking, and surface crosslinking was performed for a total of 55 minutes while heating from the initial temperature ($T_0$) of 115°C at the time of injection to the target temperature (T) of 187°C. In this regard, when 20 minutes had elapsed after the injection of the surface crosslinking solution, the temperature was raised to 159°C ($T_1$), and then, when 30 minutes had elapsed, the temperature was raised to 187°C to perform the surface crosslinking reaction. Finally, after maintaining at 187°C ($T_2$) for 20 minutes, the surface-treated powder was discharged when the total residence time in the paddle dryer reached 55 minutes.

Thereafter, the surface-treated powder was classified using an ASTM standard sieve to obtain a superabsorbent polymer powder having a particle size of 150 $\mu$m to 850 $\mu$m.

### Comparative Example 2

In the classifying step of the step 2-2 of Example 1, 80 wt% of the dry polymer (A) was mixed with 20 wt% of the fine particle reassembly (B), and then classified to have the same particle size distribution as Example 1, thereby preparing the base polymer powder.

The time of injection of the surface crosslinking solution was regarded as the starting point of surface crosslinking, and surface crosslinking was performed for a total of 55 minutes while heating from the initial temperature ($T_0$) of 115°C at the time of injection to the target temperature (T) of 187°C. In this regard, when 20 minutes had elapsed after the injection of the surface crosslinking solution, the temperature was raised to 159°C ($T_1$), and then, when 30 minutes had elapsed, the temperature was raised to 187°C to perform the surface crosslinking reaction. Finally, after maintaining at 187°C ($T_2$) for 20 minutes, the surface-treated powder was discharged when the total residence time in the paddle dryer reached 55 minutes.

Thereafter, the surface-treated powder was classified using an ASTM standard sieve to obtain a superabsorbent polymer powder having a particle size of 150 $\mu$m to 850 $\mu$m.

**Comparative Example 3**

A superabsorbent polymer was prepared in the same manner as in Example 1, except that the surface crosslinking heating conditions in the surface crosslinking step of the step 3 in Example 1 were changed.

The time of injection of the surface crosslinking solution was regarded as the starting point of surface crosslinking, and the temperature was raised from the initial temperature ($T_0$) of 115°C at the time of injection to the target temperature ($T_1$) of 168°C over 30 minutes after injection of the surface crosslinking solution, and then the temperature was decreased to 163°C ($T_2$) over 15 minutes to perform the surface crosslinking reaction. Finally, after maintaining at 163°C ($T_f$) for 5 minutes, the surface-treated powder was discharged when the total residence time in the paddle dryer reached 55 minutes.

Thereafter, the surface-treated powder was classified using an ASTM standard sieve to obtain a superabsorbent polymer powder having a particle size of 150 $\mu$m to 850 $\mu$m.

**Comparative Example 4**

A superabsorbent polymer was prepared in the same manner as in Example 1, except that the surface crosslinking heating conditions in the surface crosslinking step of the step 3 in Example 1 were changed.

The time of injection of the surface crosslinking solution was regarded as the starting point of surface crosslinking, and surface crosslinking was performed for a total of 55 minutes while heating from the initial temperature ($T_0$) of 115°C at the time of injection to the target temperature (T) of 182°C. In this regard, when 20 minutes had elapsed after the injection of the surface crosslinking solution, the temperature was raised to 160°C ($T_1$), and then, when 30 minutes had elapsed, the temperature was raised to 182°C to perform the surface crosslinking reaction. Finally, after maintaining at 182°C ($T_2$) for 20 minutes, the surface-treated powder was discharged when the total residence time in the paddle dryer reached 55 minutes.

Thereafter, the surface-treated powder was classified using an ASTM standard sieve to obtain a superabsorbent polymer powder having a particle size of 150 $\mu$m to 850 $\mu$m.

With respect to the superabsorbent polymers prepared in Examples and Comparative Examples, physical properties were evaluated by the following methods, and the results are shown in Table 1.

**[Experimental Example 1]**

(1) Centrifugal Retention Capacity (CRC)

From the superabsorbent polymers prepared in Examples and Comparative Examples, those having a particle size of 150 $\mu$m to 850 $\mu$m were taken, and centrifuge retention capacity (CRC) by absorption capacity under no load was measured in accordance with European Disposables and Nonwovens Association standard EDANA WSP 241.2.

In detail, polymers were obtained by classifying the superabsorbent polymers obtained through Examples and Comparative Examples using sieves of #30-50. The polymer WO(g) (about 0.2 g) was uniformly put in a nonwoven fabric-made bag, followed by sealing. The bag was immersed in physiological saline (0.9 wt%) at room temperature. After 30 minutes, the bag was dehydrated using a centrifuge at 250 G for 3 minutes, and then the weight W2(g) of the bag was measured. Further, after carrying out the same operation without using the polymer, the weight W1(g) of the bag was measured. CRC (g/g) was calculated using the obtained weights according to the following Equation 2:

$$[\text{Equation 2}]$$

$$CRC \text{ (g/g)} = \{[W2(g) - W1(g)]/W0(g)\} - 1$$

(2) Absorbency Under Pressure (AUP)

With respect to the superabsorbent polymers prepared in Examples and Comparative Examples, absorbency under pressure of 4.8 kPa (= 0.7 psi) of each superabsorbent polymer was measured in accordance with the EDANA method NWSP 242.0.R2. Upon measuring absorbency under pressure, the classified polymer used at the time of CRC measurement was used.

In detail, a 400 mesh stainless steel net was installed in the bottom of a plastic cylinder having an internal diameter of 25 mm. The superabsorbent polymer WO(g) (0.16 g) was uniformly scattered on the steel net under conditions of room temperature and humidity of 50%. A piston capable of uniformly providing a load of 4.8 kPa (= 0.7 psi) was placed thereon, in which an external diameter of the piston was slightly smaller than 25 mm, there was no gab between the internal wall of the cylinder and the piston, and the jig-jog of the cylinder was not interrupted. At this time, the weight W3(g) of the apparatus was measured.

After placing a glass filter having a diameter of 90 mm and a thickness of 5 mm in a petri dish having a diameter of 150 mm, a physiological saline solution consisting of 0.9% by weight of sodium chloride was poured until the surface level of the physiological saline solution became equal to the upper surface of the glass filter. A sheet of filter paper having a diameter of 90 mm was placed on the glass filter. The measurement apparatus was mounted on the filter paper, thereby getting the liquid absorbed under the load for 1 hour. 1 hour later, the weight W4(g) was measured after lifting the measurement apparatus up.

Absorbency under pressure (g/g) was calculated using each of the obtained weights according to the following Equation 3.

$$[\text{Equation 3}]$$

$$AUP(g/g) = [W4(g) - W3(g)]/W0(g)$$

(3) EFFC (arithmetic mean of centrifugal retention capacity (CRC) and absorbency under pressure (AUP))

With respect to the superabsorbent polymers prepared in Examples and Comparative Examples, EFFC was calculated according to the following Equation 1:

$$[\text{Equation 1}]$$

$$EFFC = (CRC + AUP)/2$$

in Equation 1,

CRC represents a centrifugal retention capacity (CRC) of the superabsorbent polymer, as measured in accordance with the EDENA method WSP 241.2, and

AUP represents absorbency under pressure of 4.8 kPa (= 0.7 psi) of the superabsorbent polymer, as measured in accordance with the EDANA method NWSP 242.0.R2.

**[Experimental Example 2]**

In Examples and Comparative Examples, the reaction time of the surface crosslinking step of the step 3 in the preparation process was additionally increased to examine the tendency of variations in the physical properties during the surface crosslinking process.

In detail, in the surface crosslinking step of the step 3 in Examples and Comparative Examples, heat treatment was performed for up to 70 minutes at the final temperature, and the time of injection of the surface crosslinking solution was regarded as the start time (0 minute) of surface crosslinking, and at the time points when 40 minutes, 50 minutes, 60 minutes, and 70 minutes had elapsed, 10 g of each sample was collected from the surface crosslinking reactor, respectively.

From the samples of Examples and Comparative Examples, those having a particle size of 150 $\mu$m to 850 $\mu$m were taken, and centrifuge retention capacity (CRC) by absorption capacity under no load was measured in accordance with European Disposables and Nonwovens Association standard EDANA WSP 241.2, and absorbency under pressure of 4.8 kPa (= 0.7 psi) was measured in accordance with the EDANA method NWSP 242.0.R2, respectively, which were measured in the same manner as in the experimental methods of Experimental Example 1 described above.

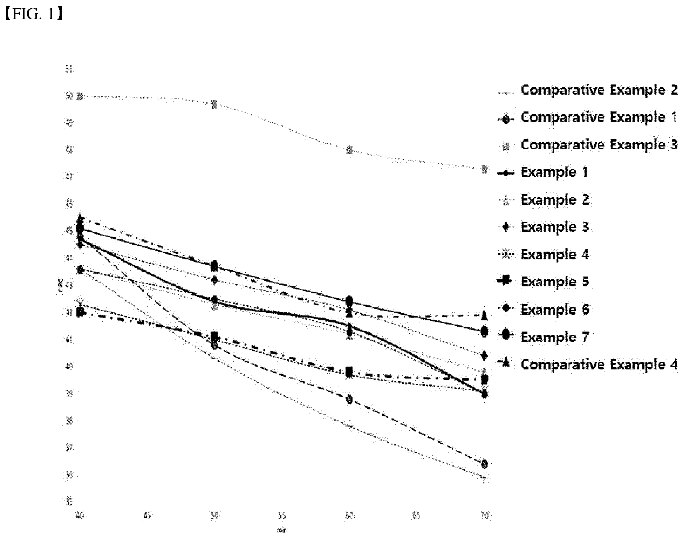

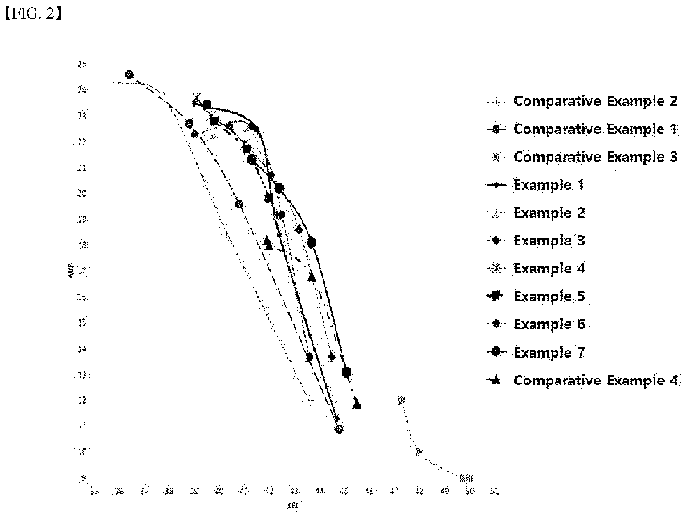

In FIG. 1, the measured values of CRC according to the surface crosslinking reaction time are shown. Among them, CRC variation values were calculated based on those at 50 minutes and 60 minutes, and the results are shown in Table 1. In addition, in FIG. 2, the values of AUP vs CRC according to the surface crosslinking reaction time are shown.

[Table 1]

| Section | CRC(g/g) | 0.7 psi AUP (g/g) | EFFC (g/g) | CRC variation |
|---|---|---|---|---|
| Example 1 | 42.0 | 20.5 | 31.2 | 0.9 |
| Example 2 | 41.8 | 20.9 | 31.3 | 1.1 |
| Example 3 | 42.7 | 19.7 | 31.2 | 1.1 |

(continued)

| Section | CRC(g/g) | 0.7 psi AUP (g/g) | EFFC (g/g) | CRC variation |
|---|---|---|---|---|
| Example 4 | 40.2 | 22.5 | 31.4 | 1.3 |
| Example 5 | 40.5 | 22.3 | 31.4 | 1.3 |
| Example 6 | 41.9 | 20.9 | 31.4 | 1.2 |
| Example 7 | 43.1 | 19.2 | 31.1 | 1.3 |
| Comparative Example 1 | 39.3 | 21.2 | 30.2 | 2.0 |
| Comparative Example 2 | 39.1 | 21.1 | 30.1 | 2.5 |
| Comparative Example 3 | 48.9 | 9.5 | 29.2 | 1.7 |
| Comparative Example 4 | 42.9 | 17.4 | 30.1 | 1.7 |

As confirmed in the data of Table 1, Examples according to the preparation method of the present invention showed a reduction in the variations of the centrifugal retention capacity of the prepared superabsorbent polymer particles by controlling the heat treatment temperature conditions in the surface crosslinking step, and the absorption properties of the final prepared superabsorbent polymer were significantly improved. Specifically, referring to Table 1 and FIG. 1, Examples showed remarkably small variations in CRC according to the surface crosslinking reaction time. Comparative Examples 1 and 2 showed remarkably large variations in CRC, and therefore, the physical properties of the final prepared superabsorbent polymers were not uniform, and the CRC physical property of the final product may also deteriorate. Comparative Example 3 also showed large variations in CRC, as compared to Examples, and in particular, showed the very low AUP range, as compared to Examples, indicating that Comparative Example 3 was out of the desired range of absorption properties.

In addition, referring to FIG. 2, Examples showed that the physical properties of CRC and AUP, which have a trade-off relationship with each other, showed a right upward sloping, and Comparative Examples 1 and 2 showed that the CRC and AUP showed a left downward sloping. In contrast, Comparative Example 3 showed a remarkably low value of AUP, which means that the surface crosslinking reaction did not occur well.

**Claims**

1. A method of preparing a superabsorbent polymer, the method comprising the steps of:

   forming a water-containing gel polymer by crosslinking-polymerizing an acrylic acid-based monomer having acidic groups, of which at least part is neutralized, in the presence of an internal crosslinking agent (step 1);
   obtaining a base polymer powder by drying, pulverizing, and classifying the water-containing gel polymer (step 2); and
   preparing superabsorbent polymer particles, on which a surface-crosslinked layer is formed, by performing heat treatment of the base polymer powder in the presence of a surface crosslinking agent (step 3);
   wherein the surface crosslinking of the step 3 is performed by heating to a target temperature (T), and a difference ($T_2 - T_1$) between the temperature ($T_2$) and the temperature ($T_1$) is 10°C to 20°C, the temperature ($T_1$) which is at the time point when 25% to 40% of the total time of the surface crosslinking of the step 3 passes, and the temperature ($T_2$) which is at the time point when 70% to 100% thereof passes.

2. The method of claim 1, wherein a difference ($T_2 - T_1$) between the temperature ($T_2$) and the temperature ($T_1$) is 10°C to 20°C, the temperature ($T_1$) which is at the time point when 30% to 40% of the total time of the surface crosslinking of the step 3 passes, and the temperature ($T_2$) which is at the time point when 90% to 100% thereof passes.

3. The method of claim 1, wherein the target temperature is 170°C to 190°C.

4. The method of claim 1, wherein the total time for which the surface crosslinking of the step 3 is performed is 45 minutes to 75 minutes.

5. The method of claim 1, wherein the total time for which the surface crosslinking of the step 3 is performed is 50 minutes to 60 minutes.

**6.** The method of claim 1, wherein the surface crosslinking agent is one or more selected from the group consisting of 1,3-propanediol, propylene glycol, 1,4-butanediol, ethylene carbonate, propylene carbonate, and ethylene glycol diglycidyl ether.

**7.** The method of claim 1, wherein the surface crosslinking agent is included in an amount of 1,000 ppmw to 5,000 ppmw with respect to the base polymer powder.

**8.** The method of claim 1, wherein a centrifugal retention capacity (CRC) of the superabsorbent polymer is 40 g/g or more, as measured in accordance with the EDANA method WSP 241.2.

**9.** The method of claim 1, wherein absorbency under pressure of 4.8 kPa (= 0.7 psi) (AUP) of the superabsorbent polymer is 18.0 g/g to 25.0 g/g, as measured in accordance with the EDANA method WSP 242.0.R2.

**10.** The method of claim 1, wherein an effective capacity (EFFC) of the superabsorbent polymer is 31 g/g or more, as calculated according to the following Equation 1:

Effective capacity (EFFC) = {Centrifuge Retention Capacity_(CRC) + Absorbency Under Pressure of 0.7 psi (AUP)}/2.

[Equation 1]

**Patentansprüche**

**1.** Verfahren zum Herstellen eines superabsorbierenden Polymers, wobei das Verfahren die Schritte umfasst aus:

Bilden eines wasserhaltigen Gelpolymers durch Vernetzungspolymerisieren eines Acrylsäure-basierten Monomers mit sauren Gruppen, von denen mindestens ein Teil neutralisiert ist, in der Gegenwart eines internen Vernetzungsmittels (Schritt 1);
Erhalten eines Basis-Polymerpulvers durch Trocknen, Pulverisieren und Klassifizieren des wasserhaltigen Gelpolymers (Schritt 2); und
Herstellen von superabsorbierenden Polymerpartikeln, auf denen eine oberflächenvernetzte Schicht gebildet ist, durch Durchführen von Wärmebehandlung des Basis-Polymerpulvers in der Gegenwart eines Oberflächenvernetzungsmittels (Schritt 3);
wobei die Oberflächenvernetzung des Schritts 3 durch Erwärmen auf eine Zieltemperatur (T) durchgeführt wird und
eine Differenz ($T_2$ - $T_1$) zwischen der Temperatur ($T_2$) und der Temperatur ($T_1$) 10°C bis 20°C beträgt, wobei die Temperatur ($T_1$) zu dem Zeitpunkt vorliegt, wenn 25 % bis 40 % der Gesamtzeit der Oberflächenvernetzung des Schritts 3 verstrichen sind, und die Temperatur ($T_2$) zu dem Zeitpunkt vorliegt, wenn 70 % bis 100 % davon verstrichen sind.

**2.** Verfahren nach Anspruch 1, wobei eine Differenz ($T_2$ - $T_1$) zwischen der Temperatur ($T_2$) und der Temperatur ($T_1$) 10°C bis 20°C beträgt, wobei die Temperatur ($T_1$) zu dem Zeitpunkt vorliegt, wenn 30 % bis 40 % der Gesamtzeit der Oberflächenvernetzung des Schritts 3 verstrichen sind, und die Temperatur ($T_2$) zu dem Zeitpunkt vorliegt, wenn 90 % bis 100 % davon verstrichen sind.

**3.** Verfahren nach Anspruch 1, wobei die Zieltemperatur 170°C bis 190°C beträgt.

**4.** Verfahren nach Anspruch 1, wobei die Gesamtzeit, für die die Oberflächenvernetzung des Schritts 3 durchgeführt wird, 45 Minuten bis 75 Minuten beträgt.

**5.** Verfahren nach Anspruch 1, wobei die Gesamtzeit, für die die Oberflächenvernetzung des Schritts 3 durchgeführt wird, 50 Minuten bis 60 Minuten beträgt.

**6.** Verfahren nach Anspruch 1, wobei das Oberflächenvernetzungsmittel ein oder mehrere ausgewählt aus der Gruppe bestehend aus 1,3-Propandiol, Propylenglykol, 1,4-Butandiol, Ethylencarbonat, Propylencarbonat und Ethylenglykoldiglycidylether ist.

**7.** Verfahren nach Anspruch 1, wobei das Oberflächenvernetzungsmittel in einer Menge von 1.000 ppmw bis 5.000 ppmw, bezogen auf das Basis-Polymerpulver, umfasst ist.

**8.** Verfahren nach Anspruch 1, wobei eine Zentrifugenretentionskapazität (CRC) des superabsorbierenden Polymers 40 g/g oder mehr beträgt, wie gemessen gemäß dem EDANA-Verfahren WSP 241.2.

**9.** Verfahren nach Anspruch 1, wobei Absorptionsvermögen unter Druck von 4,8 kPa (=0,7 psi) (AUP) des superabsorbierenden Polymers 18,0 g/g bis 25,0 g/g beträgt, wie gemessen gemäß dem EDANA-Verfahren WSP 242.0.R2.

**10.** Verfahren nach Anspruch 1, wobei eine effektive Kapazität (EFFC) des superabsorbierenden Polymers 31 g/g oder mehr beträgt, wie berechnet gemäß der folgenden Gleichung 1:

Effektive Kapazität (EFFC) = {Zentrifugenretentionskapazität (CRC) + Absorptionsvermögen unter Druck von 0,7 psi (AUP)}/2.　　　　　　　　　　[Gleichung 1]

## Revendications

**1.** Procédé de préparation d'un polymère superabsorbant, le procédé comprenant les étapes suivantes :

la formation d'un polymère en gel contenant de l'eau par réticulation-polymérisation d'un monomère à base d'acide acrylique ayant des groupes acides, dont au moins une partie est neutralisée, en présence d'un agent de réticulation interne (étape 1) ;
l'obtention d'une poudre de polymère de base par séchage, pulvérisation et classification du polymère en gel contenant de l'eau (étape 2) ; et
la préparation de particules de polymère superabsorbant, sur lesquelles une couche réticulée en surface est formée, en réalisant un traitement thermique de la poudre de polymère de base en présence d'un agent de réticulation de surface (étape 3) ;
dans lequel la réticulation de surface de l'étape 3 est réalisée par chauffage à une température cible (T), et une différence ($T_2$ - $T_1$) entre la température ($T_2$) et la température ($T_1$) est de 10 °C à 20 °C, la température ($T_1$) étant celle au moment où 25 % à 40 % du temps total de la réticulation de surface de l'étape 3 s'écoulent, et la température ($T_2$) étant celle au moment où 70 % à 100 % de celui-ci s'écoulent.

**2.** Procédé selon la revendication 1, dans lequel une différence ($T_2$ - $T_1$) entre la température ($T_2$) et la température ($T_1$) est de 10 °C à 20 °C, la température ($T_1$) étant celle au moment où 30 % à 40 % du temps total de la réticulation de surface de l'étape 3 s'écoulent, et la température ($T_2$) étant celle au moment où 90 % à 100 % de celui-ci s'écoulent.

**3.** Procédé selon la revendication 1, dans lequel la température cible est de 170 °C à 190 °C.

**4.** Procédé selon la revendication 1, dans lequel le temps total pendant lequel la réticulation de surface de l'étape 3 est réalisée est de 45 minutes à 75 minutes.

**5.** Procédé selon la revendication 1, dans lequel le temps total pendant lequel la réticulation de surface de l'étape 3 est réalisée est de 50 minutes à 60 minutes.

**6.** Procédé selon la revendication 1, dans lequel l'agent de réticulation de surface est un ou plusieurs sélectionnés dans le groupe constitué du 1,3-propanediol, du propylèneglycol, du 1,4-butanediol, du carbonate d'éthylène, du carbonate de propylène et de l'éthylèneglycoldiglycidyléther.

**7.** Procédé selon la revendication 1, dans lequel l'agent de réticulation de surface est inclus en une quantité de 1000 ppm en poids à 5000 ppm en poids par rapport à la poudre de polymère de base.

**8.** Procédé selon la revendication 1, dans lequel une capacité de rétention centrifuge (CRC) du polymère superabsorbant est de 40 g/g ou plus, telle que mesurée conformément au procédé EDANA WSP 241.2.

**9.** Procédé selon la revendication 1, dans lequel l'absorbance sous une pression de 4,8 kPa (= 0,7 psi) (AUP) du polymère superabsorbant est de 18,0 g/g à 25,0 g/g, telle que mesurée conformément au procédé EDANA WSP 242.0.R2.

**10.** Procédé selon la revendication 1, dans lequel une capacité effective (EFFC) du polymère superabsorbant est de 31 g/g ou plus, telle que calculée selon l'équation 1 suivante :

Capacité effective (EFFC) = {Capacité de rétention centrifuge_(CRC) + Absorbance sous une pression de 0,7 psi (AUP)}/2.   [Equation 1]

【FIG. 1】

【FIG. 2】

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020210177007
- KR 1020220170466
- EP 3424988 A1
- EP 3318596 A1
- EP 3540001 A1

**Non-patent literature cited in the description**

- **REINHOLD SCHWALM**. UV Coatings: Basics, Recent Developments and New Application. Elsevier, 2007, 115
- **ODIAN**. Principle of Polymerization. Wiley, 1981, 203
- *CHEMICAL ABSTRACTS*, 381686-36-8